# EUROPEAN PATENT APPLICATION

(11) **EP 4 635 803 A1**
(43) Date of publication of application: **22.10.2025**
(21) Application number: 23902861.6
(22) Date of filing: 13.12.2023
(51) Int. Cl.: B60R 19/54, B60D 3/00

(54) **MOBILE FRONT SAFETY GUARD**

(30) Priority: 14.12.2022 RU 2022132834
(71) Applicant: Otkrytoe Aktsionernoe Obshestvo «Zavod Prodmash», Samara, 443022 (RU); Tovarishchestvo S Ogranichennoi Otvetstvennostiu "SP PMK", Karaganda, 100000 (KZ)
(72) Inventor: NEMOV, Ivan Petrovich, Moscow, 107241 (RU); KURBANOV, Eldar Rashitovich, Samarskaya obl., 443095 (RU); MAKAROV, Georgii Vladimirovich, Samara, Samarskaya obl., 443011 (RU)
(74) Representative: Pons IP
(86) International application number: PCT/EA2023/050010
(87) International publication number: WO 2024/125752

(57) **Abstract**

A mobile impact attenuator (100) is configured as a wheeled trailer. The chassis of the trailer is comprised of a front frame (60) and a rear frame (30), which are connected to one another. The front frame (60) is configured as a drawbar with a drawbar eye (1) mounted to the front frame (60) via a telescopic energy-absorbing element comprising end stops (165a, 165b) mounted on either side thereof. The front frame (60) is axially movable along longitudinal elements of the chassis which are mounted on the rear frame (30). At least one first-row energy absorbing element (20) is mounted on the rear frame (30). Between the front frame (60) and the rear frame (30), at least one second row energy absorbing element (40) is mounted.

## Description

### Technical field

The present invention relates to energy absorbing devices for slowing down and stopping vehicles by absorbing energy, namely mobile impact attenuator. The device can be used both in conjunction with a truck (vehicle or its substitute), as well as single stationary.

### Prior art

A trailer crash attenuation assembly is known (patent EP2155519, patent holder: BARRIER SYSTEMS INC, publication date: 24.02.2010), comprising a longitudinal hollow member adapted to act as a hydraulic cylinder at one end, hydraulic fluid disposed in the hydraulic cylinder and a tank connected to the hydraulic cylinder to receive and store said hydraulic fluid expressed from the hydraulic cylinder. A first longitudinal telescopic member is adapted to slide into and out of the longitudinal hollow member and is adapted to act a piston. Two other longitudinal hollow members are positioned substantially parallel to and on either side of the first longitudinal hollow member and are connected to the first longitudinal hollow member. Two telescopic members are adapted to slide into and out of the two other longitudinal hollow members respectively. A casing is connected at its proximal end to all three longitudinal hollow members, is adapted at its distal end to receive a crash cushion; and has a pair of wheels.

The main disadvantage of this device is the presence of a hydraulic system, which increases the overall size of the structure, increases the complexity of the construction, and does not provide a constant ASI during a vehicle collision. Also the disadvantages include the small size of the stops, which can lead to the fact that at a certain configuration of the frame of the towing vehicle the device will not work properly.

A trailer-mounted crash impact attenuator is known (application US2011049838, patent: US8276956, patent holder: TRAFFIX DEVICES INC, publication date: 03.03.2011), which contains an anti-rotation attachment system having an internal support tube and a plurality of external support tubes. The internal support tube has a connector on its front end for attachment to a suitable receptacle on the host vehicle, and the plurality of external support tubes each have an anti-rotation support pad on their front ends. At least one of the internal support tube and the plurality of external support tubes is comprised of a telescoping construction. A backup frame is disposed on a rear end of the attachment system, and a crash attenuator unit is disposed on an axle and pair of wheels for mobility. When the crash attenuator is impacted by an errant vehicle, the anti-rotational attachment system is actuated to prevent the trailer mounted crash impact attenuator from rotating relative to the host vehicle.

The main disadvantages of this device are bending in the place of connection with the towing vehicle when the internal support tube moves through the external support tube, as well as the occurrence of rotation along the pitch axis, in particular, the trailer folding system may bend both to the roadway and away from the roadway. The disadvantages also include the fact that the width of the supports does not allow the torque to be completely eliminated, because the width of the support part is smaller in relation to the length, due to the limited width of the trailer frame support.

The closest analog is a anti-collision energy absorption device with a vehicle stopping function (patent CN213596875, patentee: JIAXING RIMINGHUAN TRAFFIC SAFETY FACILITIES CO LTD, publication date: 02.07. 2021), comprising a trailer used for being hung to the tail of a vehicle and an energy absorption box fixed to the trailer, a folding vehicle stopping frame is arranged on the bottom face of the tail of the energy absorption box, an elastic energy storage device is arranged between the folding vehicle stopping frame and the trailer. The folding vehicle stopping frame is connected with the bottom face of the energy absorption box in a clamped mode, and the free end of the folding bicycle stopping frame protrudes out of the energy absorption box.

The main disadvantage of this energy absorbing device is that the inertial overload will exceed the permissible values, in particular due to the complexity of the folding stop mechanism, which prevents the second energy absorbing box from deforming when the passenger car collides, and the internal air cushion, which gives additional elasticity due to counteracting the deformation of the first box. Also to the disadvantages can be attributed the fact that the inflation of the cushion in the second box will occur at any mass and speed of the collision of the car, as well as the fact that the mechanism of inflating the cushion depends on the temperature of operation of the device, and the tightness of all components is extremely important, violation of which can lead to inoperability of the device.

The technical problem lies in the insufficient efficiency of the designs of known mobile impact attenuators.

### Disclosure of the invention

The problem to be solved by the invention is to increase the efficiency of the mobile impact attenuator and to increase safety for people in the vehicle.

The technical result of the invention is minimization of the parameter of generalized inertial overload or ASI for people in the vehicle, which is carried out due to the sequential operation of damping units of the impact attenuator.

The configuration of the chassis of the mobile impact attenuator, the use of energy absorbing elements of different types and the selection of the rigidity of the energy absorbing elements makes it possible to ensure the sequential operation of the damping units and to minimize the parameter of generalized inertial overload or ASI for people in the vehicle.

The above technical result is achieved due to the fact that mobile impact attenuator configured as a wheeled trailer, on the chassis of which energy absorbing elements are mounted. The chassis is made of an interconnected front frame and rear frame, wherein:
- the front frame is configured as a drawbar with a drawbar eye mounted on the front frame by means of a telescopic energy absorbing element comprising end stops mounted on either side thereof, while the drawbar eye extends beyond the end stops along the axis of the chassis, wherein the front frame is axially movable along the longitudinal elements of the chassis mounted on the rear frame;
- the rear frame has at least one wheel axle mounted thereon, and at least one energy absorbing element configured as an energy absorbing cartridge;
- between the front frame and the rear frame, at least one second row energy absorbing element is mounted, which is configured as an energy absorbing cartridge,
wherein the rigidity of the energy absorbing elements is selected on the basis of a predetermined sequence of entering into operation of first row energy absorbing element (20), telescopic energy absorbing element and second row energy absorbing element (40).

Impact attenuator may comprise a rear panel mounted on the rear end of the first-row energy absorbing cartridge.

Telescopic energy absorbing element is made of at least one guide profile mounted with the possibility of telescopic movement inside at least one sleeve fixed to the front frame, wherein the sleeve contains at least one energy absorbing plate.

Energy absorbing elements may be in the form of plates which are bent inwardly of the sleeve and are configured to interact with the guide profile.

Guide profile and the sleeve may contain through longitudinal grooves in which the rod fixing device is installed.

Guide profile may contain blocks configured to impact the energy absorbing elements.

Impact attenuator may further comprise at least one gripper mounted on the rear frame.

Gripper may comprise teeth.

Covering elements with bends may be mounted on the front frame, covering the longitudinal elements of the chassis.

Impact attenuator may perform its function when coupled to a vehicle, whether in motion or parked, or stationary by itself, by means of an auxiliary load.

Longitudinal elements of the chassis can be arranged in a U-shape and comprise horizontally oriented guides and side stops made of profiles.

The mode of operation of the energy absorbing elements may be sequential, namely the first row energy absorbing element (20) is first, the telescopic energy absorbing element is second, and the second row energy absorbing element (40) is third.

The mode of operation of the energy absorbing elements may be sequential-parallel, namely the first row energy absorbing element (20) operates first, and then the telescopic energy absorbing element and the second row energy absorbing element (40) operate simultaneously or nearly simultaneously.

### Brief description of drawings

Fig. 1 - General top view of a mobile impact attenuator;
Fig. 2 - General bottom view of the mobile impact attenuator;
Fig. 3 (a) - Fig. 3 (c) - Side views of the mobile impact attenuator showing the stages of crushing of the mobile impact attenuator;
Fig. 4 - General top view of the mobile impact attenuator, showing the last stage of buckling of the mobile impact attenuator;
Fig. 5 - General bottom view of the mobile impact attenuator, showing the operation of the gripper when the vehicle collides with the mobile impact attenuator;
Fig. 6 - Side view of the mobile impact attenuator, showing the operation of the gripper when the vehicle collides;
Fig. 7 - General top view of the mobile impact attenuator, showing the front frame and the drawbar with flange;
Fig. 8 - General view of the drawbar with sleeve ;
Fig. 9 - General view of fully buckled drawbar with sleeve;
Fig. 10 - Enlarged view of the side covering element;
Fig. 11 - Side view of the mobile impact attenuator;
Fig. 12 - Top view of the mobile impact attenuator showing the initial stage of crushing of the mobile impact attenuator during an angled collision;
Fig. 13 - Top view of the mobile impact attenuator showing the second stage of crushing of the mobile impact attenuator during an angled collision;
Fig. 14 - Top view of the mobile impact attenuator, showing the final stage of crushing of the mobile impact attenuator during an angled collision.

### Embodiment of the invention

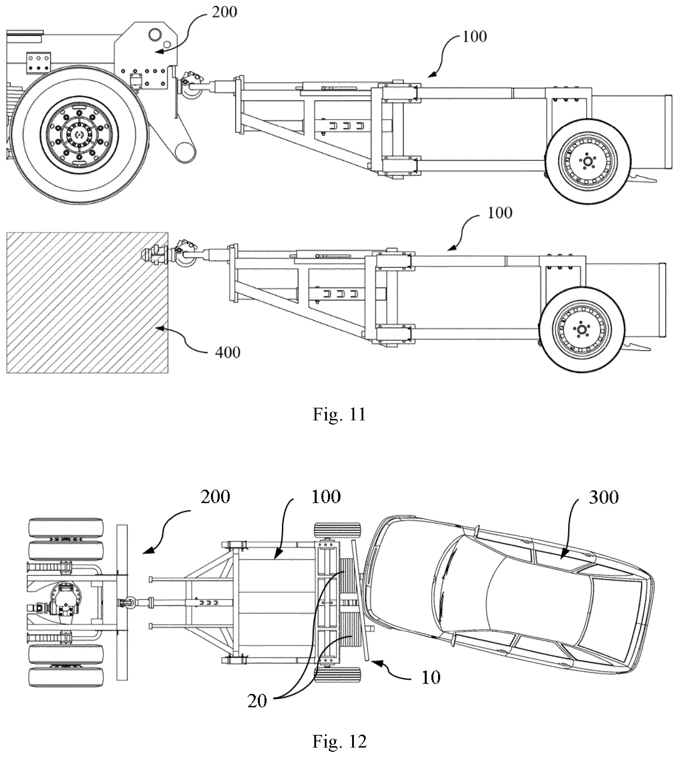

As shown in fig.11, the mobile impact attenuator (100) can perform its function in coupling with a truck vehicle (200) in motion or parked, or stationary alone, but with an auxiliary load (400) simulating the weight of the truck vehicle.

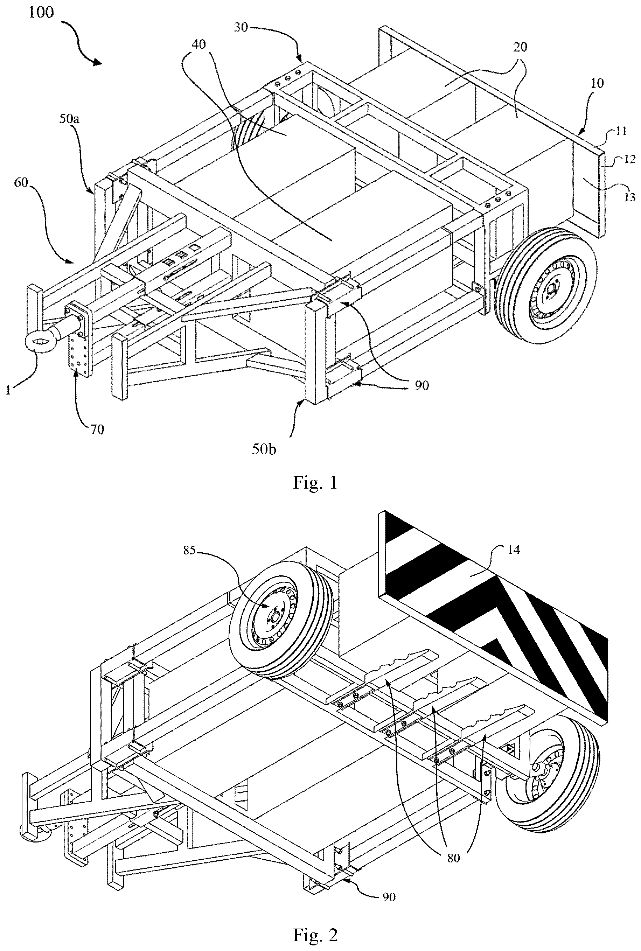

As shown in fig. 1, the mobile impact attenuator (100) is configured in the form of a wheeled trailer, on the chassis of which energy absorbing elements are placed. The chassis is made of an interconnected front frame (60) and rear frame (30). The front frame (60) is axially movable along the longitudinal frame elements mounted on the rear frame (30).

On the rear side of the mobile impact attenuator (100), namely on the side of the vehicle collision, the rear panel (10) is installed, which is configured as a rigid frame made of a longitudinal (11) and transverse (12) metal profile, fully or partially covered on one of the large surfaces with a sheet material cover (13), on the surface (14) of which optical devices, dimension and information markings are located (fig. 2).

The rear panel (10) operates as a bumper, absorbing the collision of the vehicle (300) and transmitting the collision force to the fixed first row energy absorbing element (20).

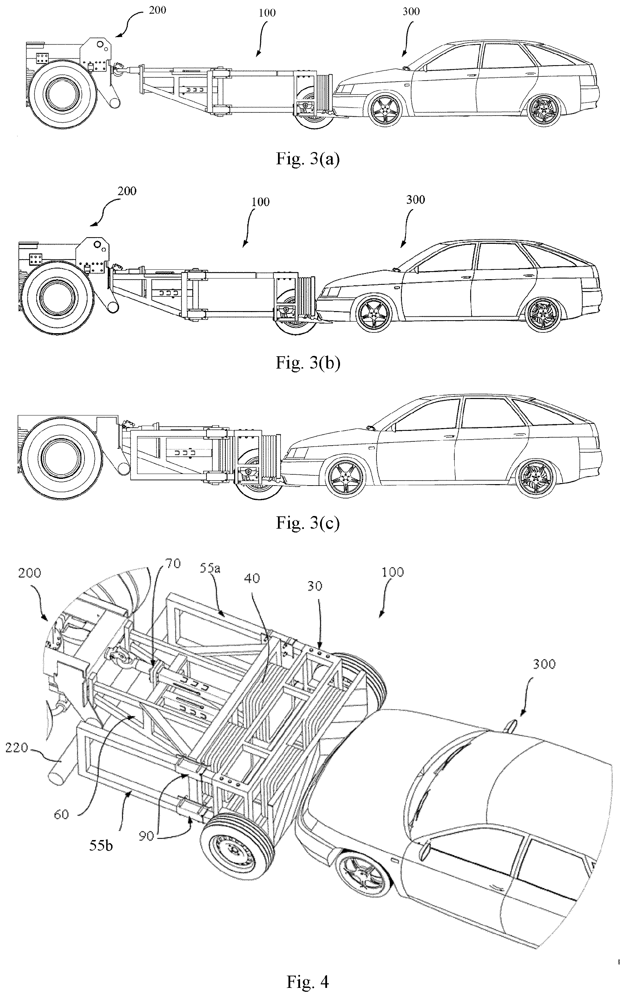

Upon deformation and buckling of the first row energy absorbing element (20), the rear panel (10) moves along the longitudinal axis of the mobile impact attenuator (100), towards the rear frame (30) which is the central unit of the mobile impact attenuator (100) (fig. 3a).

The front frame (60) is configured as a drawbar (70) with a drawbar eye (1) mounted on the front frame (60) by means of a telescopic energy absorbing element. The front frame (60) is mounted with the possibility of axial movement along the longitudinal frame elements mounted on the rear frame (30).

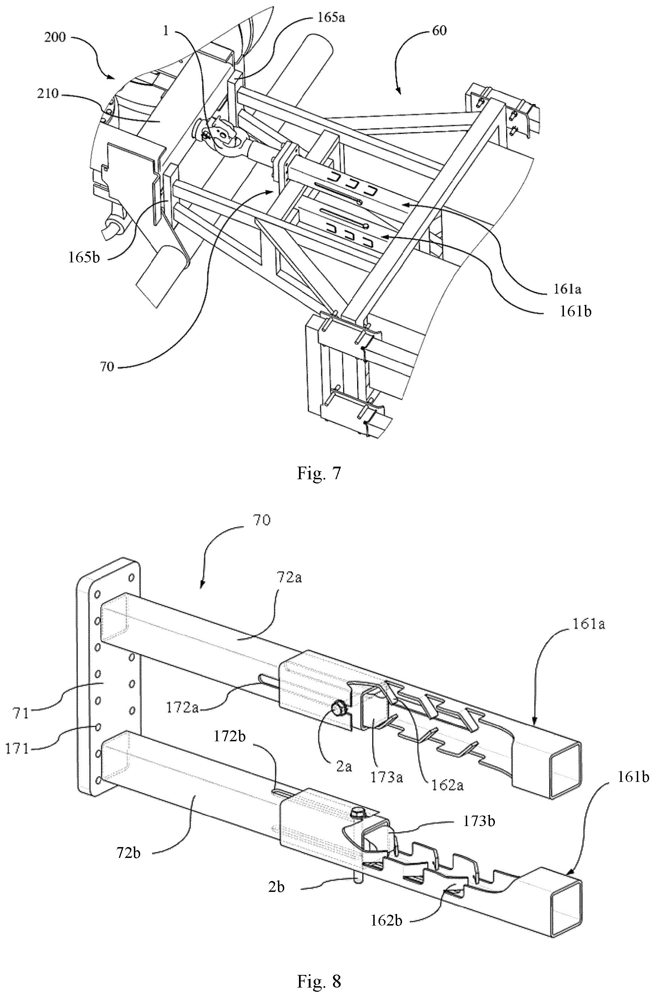

As shown in figs. 7-9, the drawbar (70) is a structure comprising an end metal plate (71) of square/rectangular/round shape with holes (171), which may be equally repetitive, and serving to attach the drawbar eye (1) and the telescopic energy absorbing member, on either side of which end stops (165a, 165b) are mounted on the front frame (60), wherein the drawbar eye (1) extends beyond the end stops (165a, 165b) along the axis of the chassis. The telescopic energy absorbing element is made of at least one guide profile (72a, 72b) mounted with the possibility of telescopic movement inwardly of at least one sleeve (161a, 161b) fixed to the front frame (60), wherein the sleeve (161a, 161b) comprises at least one energy absorbing plate (162a, 162b).

In a preferred embodiment, the telescopic energy absorbing element comprises two metal guide profiles (72a, 72b) arranged on one side of the plate (71) face, with one end fixed to this face and directed along the longitudinal plane.

Two opposite sides of the guide profiles (72a, 72b) have a through longitudinal groove (172a, 172b), and two opposite faces of the sleeve (161a, 161b) also have a corresponding through longitudinal groove (182a, 182b).

In order to fix the drawbar (70) when moving in coupling with the truck, preventing unintentional escape from the sleeve (161a, 161b), a rod fixing device (2a, 2b) passing through the through longitudinal groove (172a, 172b) and the through longitudinal groove (182a, 182b) is used. The presence of these grooves enables mutual movement of the profile (72a, 72b) and sleeve (161a, 161b) when the rod fixing device (2a, 2b) is installed. When the drawbar (70) (fig.8) is fully crushed, the rod fixing device (2a,2b) runs along the through longitudinal groove (182a, 182b) of the sleeve (161a, 161b) and the through longitudinal groove (172a, 172b) of the guide profile (72a, 72b). This thereby does not limit the movement of the drawbar and gives it full movement over the entire length of the sleeve, and the rod fixing device (2a, 2b) does not limit the movement of the drawbar and gives it full movement over the entire length of the sleeve.

The sleeve (161a, 161b) also comprises on its inner surface at least one energy absorbing plate (162a, 162b), in the form of a bended plates protruding inwardly on at least 2 opposite sides of the sleeve (161a, 161b). A block (173a, 173b) is provided on the opposite from the plate (71) end of the guide profile (72a, 72b), which deforms the energy absorbing plates (162a, 162b) during movement.

The energy absorbing plates (162a, 162b) and the blocks (173a, 173b) resting thereon provide stability against premature crushing during braking after the truck has finished moving. Directly in motion, the block (173a, 173b) deforms all energy absorbing plates (162a, 162b) that had previously limited its movement.

The energy absorbing plates (162a, 162b) also make it possible to exclude deformations of the main elements of the mobile impact attenuator at low collision energy. These structural elements absorb a part of the collision energy, which in the total sum of all energy absorbing elements of the mobile impact attenuator allows to further reduce overloading ASI when a vehicle (300) collides with it.

The end stops (165a, 165b) rest against the frame (210) of the chassis of the vehicle (200) or the auxiliary load (400) during a collision. The end stops (165a, 165b) provide stable operation of the mobile impact attenuator (100) by preventing rotation relative to the point of connection of the mobile impact attenuator (100) via the drawbar eye (1) to the vehicle (200) in the yaw axis and in the pitch axis. Such rotation may occur, in particular, when the vehicle (300) collides at an angle with the end surface of the impact attenuator. It also minimizes the possibility of the vehicle turning around when the vehicle collides at an angle with the end surface of the impact attenuator.

On the rear frame (30) are mounted longitudinal elements of the chassis, at least one wheel axle (85), and at least one first row energy absorbing element (20) configured as an energy absorbing cartridge.

Between the front frame (60) and the rear frame (30), at least one second row energy absorbing element (40), also configured as an energy absorbing cartridge, is mounted.

The first row (20) and second row (40) energy absorbing elements are configured as energy absorbing cartridges. The execution of the cartridges may vary, but preferably the execution is in the form of a honeycomb structure, for example as disclosed in documents KR101376170B1, CN214033517U, CN104213527A. The most preferable design of the energy absorbing cartridge is a honeycomb structure, the cells of which are configured in the form of straight hexagonal prisms formed by three-sided sheet elements with bent flanges by means of which adjacent sheet elements are connected (in accordance with the application RU 2022117857).

First row energy absorbing elements (20) are fixed at one end to the rear frame (30) by means of bolted connections directly to the vertical profiles of the rear frame structure (30) via through holes in both elements.

Second row energy absorbing elements (40) are fixed at one end to the rear frame (30) with bolted connections directly to the vertical profiles of the structure of the rear frame (30) via the through holes in both bodies, and the other end is fixed at the front frame (60) with bolted connections directly to the vertical profiles of the structure of the front frame (60) via the through holes in both elements.

The longitudinal elements of the chassis are configured U-shaped and comprise horizontally oriented guides (55a, 55b) and side stops (50a, 50b) made in the form of profiles with a closed cross-section, in particular rectangular, square, circular or the like.

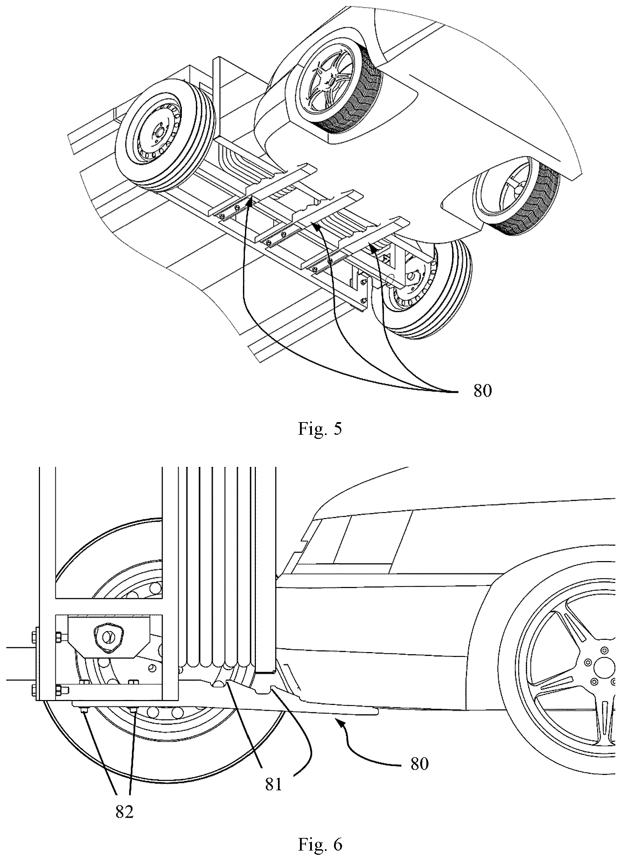

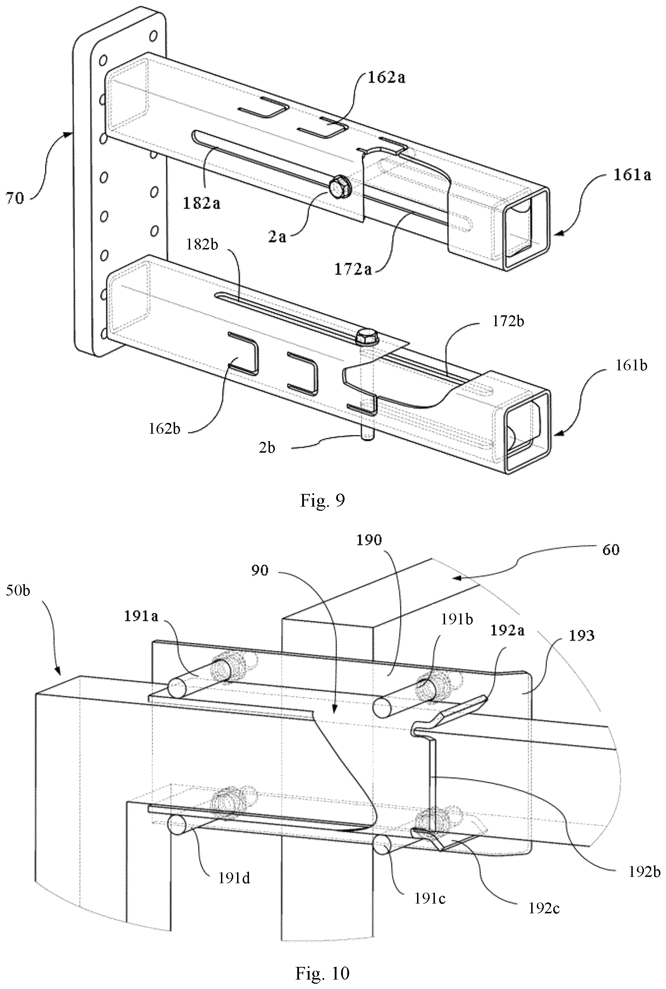

Horizontally oriented guides (55a, 55b) functionally define the collapsing direction of the mobile impact attenuator (100) and guide the vehicle (300) fixed by the grippers (80) (fig.6). The movement takes place through the covering elements (90) (fig.10).

The side stops (50a, 50b) rest against the underrun bars (220) of the vehicle (200) or against the auxiliary load (400) when the vehicle (200) is collided with. This provides additional stability when collapsing and enables stable operation of the mobile impact attenuator (100) by eliminating the torque that may arise from the residual inertia of the colliding vehicle and avoiding critical buckling of the mobile impact attenuator (100), allowing the mobile impact attenuator to be reused.

Covering elements (90) follows the shape of horizontally oriented guides (55a, 55b), which makes it possible to fully cover them and create a maximum contact area. Covering elements (90) are mounted on the front frame (60) by means of flanges (190).

The arrangement is made rigidly, via pins (191a, 191b, 191c, 191d) on the flanges (190) of the front frame (60). In order to ensure stable longitudinal sliding through the covering elements (90) and to avoid jamming and bending, bends (192a, 192b, 192c) are located on the inlet face along the edges, and a rib bend (193) is located on the inlet face of the flange (190), which allow at the critical moment of bending horizontally oriented guides (55a, 55b) to avoid jamming at possible runout of longitudinal elements of the chassis both in vertical and horizontal direction when moving the profile.

Functionally, the bends avoid jamming in case of possible runout of the longitudinal elements of the chassis both in vertical and horizontal direction when moving the profile.

Every year the model range of modern automobiles increases, with body types ranging from sedan to pickup truck. Consequently, the weight range and ground clearance height is increasing. "Underrun" of a low ground clearance vehicle with a low center of gravity is dangerous. Because in case of impact, when the front part of the car comes into contact with the trailer and the speed starts to slow down, all kinetic energy of the car tends to transfer to the front part of the car, thus creating a torsional moment relative to the center of gravity of the car with a positive value. Since the vehicle has two rolling support points (front axle and rear axle), the front shock absorbers are compressed on the vehicle, which leads to a decrease in ground clearance in the front part and an increase in ground clearance in the rear part of the vehicle, which increases the possibility of "underrun".

For a stable vehicle collision, grippers (80) are mounted on the lower part of the rear frame (30) (fig.2). The grippers go under the underbody of the vehicle (300) (fig.5,6) during the collision and do not allow the vehicle to slip off them due to the teeth (81) located on the sloping edge.

Functionally, these grippers (80) are configured to catch/secure the front of the vehicle to prevent "underruns". Since the inertia of the collision, when braking the vehicle (300) passes from the center portion to the nose portion, this gives a "underrun" effect. In this way, in particular, additional stability of the operation of the mobile guardrail is ensured when a vehicle collides at an angle to the end surface of the guardrail.

Thus grippers (80) provide an opportunity to avoid the influence on the operation of the mobile impact attenuator (100) of various factors such as the position of deformation force elements of the vehicle, its ground clearance, the geometry of the bumper, the position of the height of the center of gravity.

The choice of stiffness of energy absorbing elements is determined by the sequence of impact energy transfer from the end to the beginning of the mobile impact attenuator (100) and is based on the requirements of obtaining the value of permissible overloads ASI for a passenger car of low mass 900-1000 kg and a passenger car of mass 2000-2400 kg. The energy absorbing elements, which work first, have a lower stiffness. They allow the initial impact of the vehicle (300) to be absorbed. This choice of stiffness is necessary to keep the ASI value of the vehicle (300) low at the initial moment. This function is performed by the first row energy absorbing element (20).

Next, the telescopic energy absorbing element and the second row energy absorbing element (40) come into operation. They may operate sequentially or simultaneously depending on the selected mode of operation of the first row energy absorbing element (20), the telescopic energy absorbing element and the second row energy absorbing element (40). There may be 2 variants of such modes, namely:
- sequential - first operates first row energy absorbing element (20), then the telescopic energy absorbing element, and then the second row energy absorbing element(40) comes into operation;
- sequential-parallel - first row energy absorbing element (20) operates first, and then telescopic energy absorbing element and second row energy absorbing element (40) operate simultaneously or almost simultaneously.

In this case, the first row energy absorbing element (20) may continue to operate when the telescopic energy absorbing element and/or the second row energy absorbing element (40) starts operating, and the second row energy absorbing element (40) may deform and start operating when energy is transferred to the telescopic energy absorbing element.

The telescopic energy absorbing element absorbs less energy compared to the first row (20) and second row (4) energy absorbing elements. Its main function is to stabilize the device in case of a side impact and an impact at an angle to the end surface of the impact attenuator. When the telescopic energy absorbing element is crushed, the end stops (165a, 165b) are pushed into the frame of the vehicle (200) or auxiliary load (400). This prevents the device from being deflected strongly to the left or right in case of a side collision or a collision at an angle to the end surface of the guardrail (fig.7).

A second element that increases the above described stabilization is side stops (50a, 50b) that rest against the underrun bars (220) of the vehicle (200) or auxiliary load (400) when the second row energy absorbing elements (40) are in operation. During operation of the second row energy absorbing elements (40) the horizontally oriented guides (55a, 55b) are moved, which in turn move the side stops (50a, 50b), i.e. the longitudinal elements of the chassis of the mobile impact attenuator (100) comprising the horizontally oriented guides (55a, 55b) and the side stops (50a, 50b) moves telescopically, thereby further preventing deflection of the device in case of a side collision.

In this way, the chassis elements of the mobile impact attenuator (100) prevent the second row energy absorbing element (40) from bending upwards or downwards and, at the same time, in case the collision occurs at an angle to the end surface of the mobile impact attenuator (100), even support of the side stops (50a, 50b) are provided.

Second row energy absorbing elements (40) have a greater stiffness than first row energy absorbing elements (20) to absorb most of the energy transmitted from the vehicle (300).

To determine the optimum geometric parameters of the energy absorbing elements, virtual tests of the matrix of values are carried out and, based on the data obtained, the elements are combined based on the conditions described above and repeated virtual tests of the already combined elements are carried out, followed by field tests to confirm the previously obtained results.

### The device works as follows.

Examples of operation of the mobile impact attenuator at the selected sequential mode of operation of the first row energy absorbing element (20), the telescopic energy absorbing element and the second row energy absorbing element (40) are described below.

When a vehicle collides with the mobile impact attenuator (100) (fig. 3a), the kinetic energy of the moving object is transferred through the rear panel (10) and the first row energy absorbing element (20) to the entire structure of the mobile impact attenuator.

The rear panel (10) transmits the collision force to the attached first row energy absorbing element (20). As the first row energy absorbing element (20) deforms and buckles, the rear panel (10) moves along the longitudinal axis of the mobile impact attenuator (100), towards the rear frame (30) (fig. 3a).

The impact grippers engage under the vehicle (300) underbody (fig. 4) and are prevented from slipping by the means of the teeth (81) (figs. 5, 6).

In the collision process, after buckling of the first row energy absorbing element (20), the entire mobile impact attenuator (100) is moved as a whole (fig. 3b). The vehicle (200) or the auxiliary load (400) remains stationary or nearly stationary, since no transmitted collision energy from the vehicle (300) is transmitted at this stage of the collision. The same effect will occur when the vehicle (200) and the mobile impact attenuator (100) move together, until the speed of the mobile impact attenuator (100) when impacted by the vehicle (300) is higher than the speed of the vehicle (200).

The drawbar (70) connected via the drawbar eye (1) also remains stationary. At the same time, the front frame (60) rides on the drawbar (70), the guide profiles (72a, 72b) of which are mounted in the sleeves (161a, 161b) of the front frame (60) (fig. 3b, 7), until the end stops (165a, 165b) rest against the frame (210) of the shassis of the vehicle (200) or against the auxiliary load (400).

During the drawbar (70) is fully inserted into the sleeves (161a, 161b) (fig.8), the rod fixing device (2a, 2b) runs along the through longitudinal groove (182a, 182b) of the sleeves (161a, 161b) (fig.9). Immediately in motion, the block (173a, 173b) deforms all energy absorbing plates (162a, 162b) limiting its movement earlier.

In the process of further collision, after the guide profile (72a, 72b) of the drawbar (70) enters the sleeve (161a, 161b) and determines the position of the front frame (60), the rear frame (30) is moved, which deforms the second row energy absorbing element (40) during the movement (fig. 3c).

At the same time, together with the rear frame (30) along the axis of the mobile impact attenuator the longitudinal elements of the chassis move along the axis of the mobile impact attenuator. The movement of the longitudinal elements of the chassis, namely the horizontally oriented guides (55a, 55b), is carried out through the covering elements (90). The horizontally oriented guides (55a, 55b) are moved until the side stops (50a, 50b) rest against the underrun bars (220) of the vehicle (200) (fig. 4) or the auxiliary load (400).

In case of a vehicle (300) colliding with the mobile impact attenuator (100) (fig. 12) at an angle to the end surface of the mobile impact attenuator (100), the kinetic energy of the moving object is transferred through the rear panel (10) and the first row energy absorbing element (20) to the entire structure of the mobile impact attenuator, creating a torsional moment due to the misalignment of the trajectory of inertia of the vehicle (300) and the longitudinal axis of the mobile impact attenuator (100).

The rear panel (10) thus transmits the torsional moment from the collision force to the fixed first row energy absorbing element (20). During deformation and buckling of the first row energy absorbing element (20) rear panel (10) moves along the longitudinal axis of the mobile impact attenuator (100), towards the rear frame (30) (fig. 12).

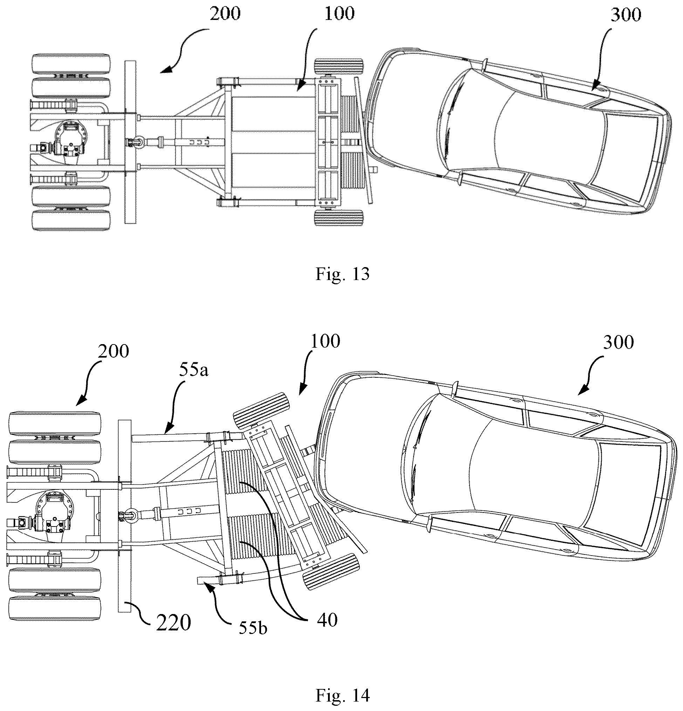

In the collision process, after folding of the first row energy absorbing element (20), the entire mobile impact attenuator (100) is moved as a whole (fig. 13).

The vehicle (200) or the auxiliary load (400) remains stationary or nearly stationary because the inertia of the collision energy transferred from the vehicle (300) to the vehicle (200), at this moment of the collision, has not been transferred. The same effect will occur when the vehicle (200) and the mobile impact attenuator (100) move together, until the speed of the mobile impact attenuator (100) when impacted by the vehicle (300) is greater than the speed of the vehicle (200).

The drawbar (70) connected via the drawbar eye (1) also remains stationary. In this case, the front frame (60) is pushed against the drawbar (70), whose guide profiles (72a, 72b) are mounted in the sleeves (161a, 161b) of the front frame (60) (fig. 7), until the end stops (165a, 165b) rest against the frame (210) of the chassis (200) of the vehicle (200) or against the auxiliary load (400).

When the drawbar (70) is fully inserted into the sleeves (161a, 161b) (fig.8), the rod fixing device (2a, 2b) runs along the through longitudinal groove (182a, 182b) of the sleeves (161a, 161b) (fig.9). Immediately in motion, the block (173a, 173b) deforms all energy absorbing plates (162a, 162b) limiting its movement earlier.

In the process of further collision, after the guide profile (72a, 72b) drawbar (70) enters the sleeve (161a, 161b) and determines the position of the front frame (60) there is movement of the rear frame (30), which deforms the second row energy absorbing element (40) during movement (fig. 14).

In this case, together with the rear frame (30), to which the rotational torque is transmitted along the axis of the mobile enclosure, the longitudinal elements of the chassis move.

The movement of the longitudinal elements of the chassis, namely the horizontally oriented guides (55a, 55b), through the covering elements (90) does not occur simultaneously, depending on the impact force of the vehicle (300). In the event of a severe impact, only one horizontally oriented guide (55a) is moved to the stop (50a) in the underride bar (220) of the vehicle (200) (fig. 14) or auxiliary load (400), because it is this guide that is subject to the torsional moment from the inertia of the collision. This stop prevents further torsion of the mobile impact attenuator (100) frontal and prevents further movement of the vehicle (300).

## Claims

1. Mobile impact attenuator (100), configured as a wheeled trailer, on the chassis of which energy absorbing elements are mounted, **characterized in that** the chassis is made of an interconnected front frame (60) and rear frame (30), wherein:
the front frame (60) is configured as a drawbar with a drawbar eye (1) mounted on the front frame (60) by means of a telescopic energy absorbing element comprising end stops (165a, 165b) mounted on either side thereof, while the drawbar eye (1) extends beyond the end stops (165a, 165b) along the axis of the chassis, wherein the front frame (60) is axially movable along the longitudinal elements of the chassis mounted on the rear frame (30);
the rear frame (30) comprises at least one wheel axle mounted thereon, and at least one first row energy absorbing element (20) configured as an energy absorbing cartridge;
between the front frame (60) and the rear frame (30), at least one second row energy absorbing element (40) is mounted, which is configured as an energy absorbing cartridge,
wherein the rigidity of the energy absorbing elements is selected on the basis of a determined sequence of energy absorbing elements entering into operation

2. Impact attenuator according to claim 1, **characterized in that** it comprises a rear panel (10) mounted on the rear end of the first-row energy absorbing cartridge.

3. Impact attenuator according to claim 1, **characterized in that** the telescopic energy absorbing element is made of at least one guide profile (72a, 72b) mounted with the possibility of telescopic movement inside at least one sleeve (161a, 161b) fixed to the front frame (60), wherein the sleeve (161a, 161b) contains at least one energy absorbing plate (162a, 162b).

4. Impact attenuator according to claim 3, **characterized in that** the energy absorbing plates (162a, 162b) are configures as plates which are bent inwardly of the sleeve (161a, 161b) and are configured to interact with the guide profile (72a, 72b).

5. Impact attenuator according to claim 3, **characterized in that** the guide profile (72a, 72b) and the sleeve (161a,161b) contains through longitudinal grooves in which the rod fixing device (2a, 2b) is installed.

6. Impact attenuator according to claim 3, **characterized in that** the guide profile (72a, 72b) contains blocks (173a, 173b) configured to impact the energy absorbing plates (162a, 162b).

7. Impact attenuator according to claim 1, **characterized in that** impact attenuator further comprises at least one gripper (80) mounted on the rear frame (30).

8. Impact attenuator according to claim 7, **characterized in that** at least one gripper (80) comprises teeth (81).

9. Impact attenuator according to claim 1, **characterized in that** covering elements (90) with bends (192a, 192b, 192c) are mounted on the front frame (60), covering the longitudinal elements of the chassis.

10. Impact attenuator according to claim 1, **characterized in that** it can perform its function when coupled to a vehicle (200), whether in motion or parked, or stationary by itself, by means of an auxiliary load (400).

11. Impact attenuator according to claim 1, **characterized in that** the longitudinal elements of the chassis are comfigured in a U-shape and comprise horizontally oriented guides (55a, 55b) and side stops (50a, 50b) made of profiles.

12. Impact attenuator according to claim 1, **characterized in that** the mode of operation of the energy absorbing elements is sequential, namely the first row energy absorbing element (20) operates first, the telescopic energy absorbing element is second, and the second row energy absorbing element (40) is third.

13. Impact attenuator according to claim 1, **characterized in that** the mode of operation of the energy absorbing elements is sequential-parallel, namely the first row energy absorbing element (20) operates first, and then the telescopic energy absorbing element and the second row energy absorbing element (40) operate simultaneously or nearly simultaneously.
